# EUROPEAN PATENT APPLICATION

(11) **EP 4 496 340 A1**
(43) Date of publication of application: **22.01.2025**
(21) Application number: 23777883.2
(22) Date of filing: 17.03.2023
(51) Int. Cl.: H04Q 11/00

(54) **BANDWIDTH DISTRIBUTION METHOD AND APPARATUS, STORAGE MEDIUM, AND PROGRAM PRODUCT**

(30) Priority: 29.03.2022 CN 202210320811
(71) Applicant: ZTE Corporation, Shenzhen, Guangdong 518057 (CN)
(72) Inventor: ZHANG, Weiliang, Shenzhen, Guangdong 518057 (CN); YUAN, Liquan, Shenzhen, Guangdong 518057 (CN); LI, Mingsheng, Shenzhen, Guangdong 518057 (CN); HUANG, Xingang, Shenzhen, Guangdong 518057 (CN); MA, Zhuang, Shenzhen, Guangdong 518057 (CN)
(74) Representative: Zoli, Filippo
(86) International application number: PCT/CN2023/082230
(87) International publication number: WO 2023/185509

(57) **Abstract**

The present application discloses a bandwidth distribution method and apparatus, a storage medium, and a program product. The bandwidth distribution method comprises: performing bandwidth distribution on specified distribution objects in different transmission channels, so that bandwidths obtained by different specified distribution objects satisfy a preset bandwidth distribution condition, wherein the preset bandwidth distribution condition comprises: any one of the cases that the bandwidths obtained by different specified distribution objects do not overlap with each other, partially overlap with each other, or fully overlap with each other.

## Description

### CROSS-REFERENCE TO RELATED APPLICATION

This application is filed on the basis of the Chinese patent application No. 202210320811.4 filed March 29, 2022, and claims priority of the Chinese patent application, the entire contents of which are incorporated herein by reference.

### TECHNICAL FIELD

The present disclosure relates to the field of telecommunication, in particular to a method for bandwidth allocation, an apparatus, a computer storage medium, and a computer program product.

### BACKGROUND

The current bandwidth allocation for Optical Distribution Network (ODN) in related art involves sending at first, by an Optical Network Unit (ONU) to an Optical Line Terminal (OLT), a request that carries the transmission bandwidth expected by the ONU (corresponding to the transmission wavelength expected by the ONU). After the OLT receives and successfully analyzes the request sent by the ONU, the OLT allocates bandwidth to the ONU according to the transmission bandwidth expected by the ONU. That is, in the related art, the OLT allocates bandwidth based on the request of the ONU, which is not conducive to the bandwidth allocation and management of the ONU by the OLT.

### SUMMARY

The following is a summary of the subject matter described herein. This summary is not intended to limit the scope of protection of the claims.

Provided are a method for bandwidth allocation, an apparatus, a computer storage medium, and a computer program product in some embodiments of the present disclosure, which are intended to improve the efficiency of bandwidth allocation and management.

According to an aspect of the present disclosure, a method for bandwidth allocation is provided. The method includes: performing bandwidth allocation to each of a plurality of designated allocation objects across different transmission channels, such that the bandwidths obtained by the plurality of designated allocation objects meet a preset bandwidth allocation condition; where, the preset bandwidth allocation condition includes one of, non-overlapping, partial overlapping, or complete overlapping of the bandwidths obtained by the plurality of designated allocation objects.

According to another aspect of the present disclosure, a method for bandwidth allocation is provided. The method includes: acquiring a bandwidth allocation result indicating bandwidths acquired by each of a plurality of designated allocation objects across different transmission channels; determining a plurality of target objects from the plurality of designated allocation objects according to the bandwidth allocation result; and performing fault diagnosis on the plurality of target objects.

According to another aspect of the present disclosure, an apparatus for bandwidth allocation is provided. The apparatus includes at least one processor, and at least one memory storing at least one program thereon, which when executed by the processor, causes the processor to carry out any one of the methods as described above.

According to another aspect of the present disclosure, a computer-readable storage medium is provided. The computer-readable storage medium stores a computer program which, when executed by a processor, causes the processor to carry out any one of the methods as described above.

According to another aspect of the present disclosure, a computer program product is provided. The product includes a computer program, or a computer instruction stored in a computer-readable storage medium which, when executed by a processor of a computer device, causes the computer device to carry out any one of the methods as described above.

According to various embodiments of the present disclosure, the bandwidth allocation can be performed on the designated allocation objects in different transmission channels, such that the bandwidths obtained by different designated allocation objects meet the preset bandwidth allocation condition. The preset bandwidth allocation condition can be set according to actual network conditions such that the bandwidths belong to any one of non-overlapping, partial overlapping or complete overlapping. Therefore, according to an embodiment of present disclosure, it is possible to proactively allocate the bandwidth to the designated allocation objects, thereby improving the efficiency of bandwidth allocation management. Further, it is possible to detect the occurrence of the transmission conflict between the designated allocation objects under the condition that the bandwidth allocations of the designated allocation objects are overlapped with each other. And the designated allocation objects can be separated under the condition that the bandwidth allocations of the designated allocation objects do not overlap with each other to reduce or eliminate the influence on each other, thus making up for the technical gap in related methods.

Other features and advantages of the present disclosure will be illustrated in the following description, and in part will be apparent from the description, or may be understood by practicing the present disclosure. The objects and other advantages of the present disclosure can be achieved and obtained by the structure particularly set forth in the description, claims and drawings.

### BRIEF DESCRIPTION OF DRAWINGS

The drawings are intended to provide a further understanding of the technical scheme of the present disclosure, and constitute a part of the specification, and they are intended to illustrate the technical scheme of the present disclosure in conjunction with the embodiments of the present disclosure but are not intended to limit the technical scheme of the present disclosure.
FIG. 1 depicts a flowchart showing a method for bandwidth allocation according to an embodiment of the present disclosure.
FIG. 2 depicts a flowchart showing the bandwidth allocation for designated allocation objects across different transmission channels in a method for bandwidth allocation according to an embodiment of the present disclosure.
FIG. 3 depicts a flowchart showing conflict detection for different designated allocation objects in a method for bandwidth allocation according to an embodiment of the present disclosure.
FIG. 4 depicts a flowchart showing conflict detection for different designated allocation objects in a method for bandwidth allocation according to another embodiment of the present disclosure.
FIG. 5 depicts a flowchart showing conflict detection for different designated allocation objects in a method for bandwidth allocation according to another embodiment of the present disclosure.
FIG. 6 depicts a flowchart showing a method for bandwidth allocation according to another embodiment of the present disclosure; and
FIG. 7 depicts a flowchart of fault diagnosis for a plurality of target objects in a method for bandwidth allocation according to an embodiment of the present disclosure.

### DETAILED DESCRIPTION

The purpose, technical scheme and advantages of the present disclosure will become apparent through the following description for various embodiments in conjunction with the drawings. It should be understood that the embodiments described here are intended for illustration but not limitation of the present disclosure.

It shall be noted that, in some cases, the operations shown or described may be performed in a different order than the logical order shown in the flowcharts. It should be noted that the terms "first" and "second", if used in the description, the claims and the drawings are intended to distinguish similar objects, and do not necessarily imply any specific order or sequence.

Currently, a large number of Gigabit-capable passive optical network (GPON) systems have been deployed in FTTx market. With the upgrade of standards and the increase of user demand, GPON systems have gradually evolved to XG(S)-PON. GPON and XG(S)-PON coexist by wavelength division, that is, GPON and XG(S)-PON have different downlink wavelengths and different uplink wavelengths. During upgrading and evolution, GPON and XG(S)-PON may coexist in the same ODN. That is, both GPON system and XG(S)-PON system may be arranged within the same ODN. In order to reduce the influence of XG(S)-PON system on GPON system, in the ITU-T standards G.987.2 and G.9807.1, the Side-Mode Suppression Ratio (SMSR) of XG (S) - PON ONU optical transmission module is defined to be 30dB to limit the Mode Partition Noise (MPN) caused thereby.

However, in practical testing, there are still cases where XG(S)-PON ONU affects the receiving sensitivity of GPON OLT, which leads to bit errors, especially when the transmission loss from GPON ONU to GPON OLT is large and that from XG(S)-PON ONU to XG(S)-PON OLT is low. The standard organization proposed to limit the OOB PSD of XG(S)-PON ONU. Upon investigation, it is necessary to increase the cost of XG(S)-PON ONU. Due to the large number of ONU sides, the overall cost is relatively higher.

In addition to the impact of XG (S) - PON ONU on GPON OLT, GPON ONU may also have an impact on XG (S) - PON OLT. Due to the widespread deployment of GPON ONU, the reduction in the OOB PSD of GPON ONU would result in higher overall costs.

Improving the receiving sensitivity of OLT is helpful to solve this problem. However, it is difficult to improve the receiving sensitivity, especially considering the situation that the receiving sensitivity of class D is already high.

Besides the impact between XG(S)-PON and GPON, similar impact is present among the channels of TWDM-PON. The ITU-T G.989.2 standard specifies the OOB PSD on the ONU side, but currently TWDM-PON has not been deployed on a large scale. If large-scale deployment of TWDM-PON is possible in the future market, the overall cost of implementing OOB PSD on the ONU side will also be relatively high.

The impact of OOB interference between different channels is a common issue in passive optical networks where different wavelengths coexist in one ODN. It is important to provide low-cost and efficient solutions to reduce OOB interference between different channels.

In view of the foregoing issues, a method for bandwidth allocation, an apparatus, a computer storage medium and a computer program product are provided in some embodiments of the present disclosure. According to an embodiment, a method for bandwidth allocation is provided. The method includes, performing bandwidth allocation to each of a plurality of designated allocation objects across different transmission channels, such that the bandwidths obtained by different designated allocation objects of the plurality of designated allocation objects meet a preset bandwidth allocation condition; where, the preset bandwidth allocation condition includes one of, non-overlapping, partial overlapping, or complete overlapping of the bandwidths obtained by different ones of the plurality of designated allocation objects. According to this embodiment, the bandwidth allocation can be performed on the designated allocation objects in different transmission channels, such that the bandwidths obtained by different designated allocation objects meet the preset bandwidth allocation condition. The preset bandwidth allocation condition can be set according to actual network conditions such that the bandwidths belong to any one of non-overlapping, partial overlapping, or complete overlapping. Therefore, according to an embodiment of the present disclosure, it is possible to proactively allocate the bandwidth to the designated allocation objects, thereby improving the efficiency of bandwidth allocation management. Further, it is possible to detect the occurrence of the transmission conflict between the designated allocation objects under the condition that the bandwidth allocations of the designated allocation objects are overlapped with each other. And the designated allocation objects can be separated under the condition that the bandwidth allocations of the designated allocation objects do not overlap with each other to reduce or eliminate the influence on each other, thus making up for the technical gap in related methods.

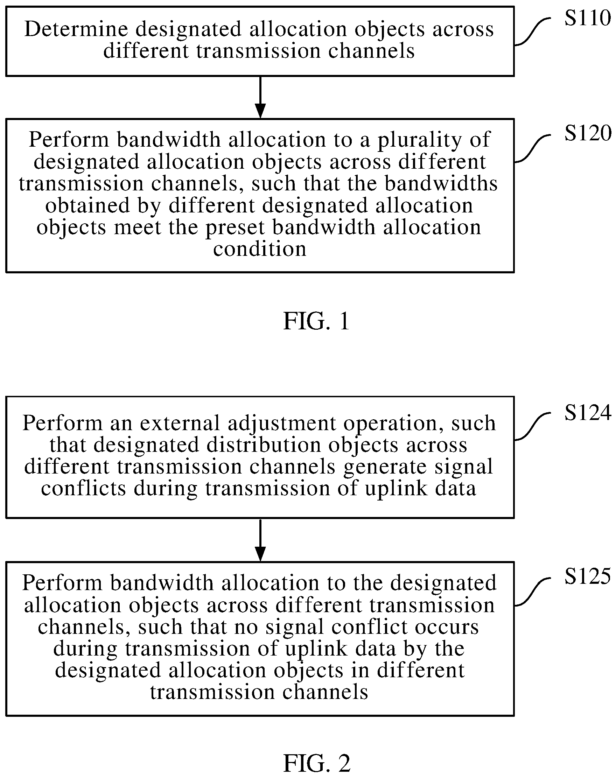

Several embodiments of the present disclosure will be further illustrated with reference to the drawings. FIG. 1 is a flowchart showing a method for bandwidth allocation according to an embodiment of the present disclosure.

As shown in FIG. 1, the method includes, but is not limited to, operations S110 to S120.

At operation S110, designated allocation objects are determined across different transmission channels.

In this operation, the designated allocation objects in different transmission channels are determined in advance, so as to facilitate the bandwidth allocation of the designated allocation objects in different transmission channels in the subsequent operations.

It should be noted that a designated allocation object in this embodiment can be, but is not limited to, an ONU which can also be identified by an ONU identifier such as ONU-ID, PLID, SN, MAC, or a logical link in an ONU identified by such as Logical Link Identifier (LLID), or a bandwidth allocation entity such as T-CONT, GLID.

It should be noted that when operation S110 is applied in a passive optical network, there may be multiple types of different transmission channels and multiple application scenarios, and no restriction is posed thereto here. For example, with the upgrading of network standards and the increase of user demand, the current GPON gradually evolves to XG(S)-PON system. During the upgrading and evolution, GPON and XG(S)-PON may coexist in the same ODN. That is, both GPON and XG(S)-PON may be arranged in the same ODN. It is possible that an ONU of XG(S)-PON affects the receiving sensitivity of an OLT of the GPON, which results in bit errors. It is also possible that an ONU of GPON affects the receiving sensitivity of the OLT of XG(S)-PON, which leads to bit errors. That is to say, in this application scenario, out-of-band interference may occur between different transmission channels, including the transmission channel of XG(S)-PON and the transmission channel of GPON. The corresponding application scenario is the coexistence system/device during the evolution and upgrading from G-PON to XG(S)-PON. Alternatively, the transmission channels include the transmission channel of G-PON and the transmission channel of 50G-PON, and the corresponding application scenario is the coexistence system/device during the evolution and upgrading from G-PON to 50G-PON. Alternatively, the transmission channels include XG(S)-PON and 50G-PON, and the corresponding application scenario is the coexistence system/device during the evolution and upgrading from XG(S)-PON to 50G-PON. For another example, different transmission channels including time and wavelength division multiplexed PON (TWDM-PON) are included.

It should be noted that different transmission channels support time synchronization. Thus, it is convenient to detect the overlapping relationship of the designated allocation objects across different transmission channels according to the feature of supporting time synchronization of different transmission channels, which will not be further described here, but will be described in greater details in the following embodiment(s).

At operation S120, bandwidth allocation is performed to a plurality of designated allocation objects across different transmission channels, such that the bandwidths obtained by different designated allocation objects meet the preset bandwidth allocation condition.

It should be noted that the preset bandwidth allocation condition includes one of, non-overlapping, partial overlapping or complete overlapping of the bandwidths obtained by different designated allocation objects. In particular, "non-overlapping" indicates that the bandwidths of different designated allocation objects are different in any position. "Partial overlapping" means that different designated allocation objects have the same bandwidth part but are not exactly the same. "Complete overlapping" indicates that the bandwidths of different designated allocation objects are completely the same.

In this operation, since the designated allocation objects over different transmission channels have been determined in operation S110, the bandwidth allocation can be performed on the designated allocation objects in different transmission channels in operation S120, such that the bandwidths obtained by different designated allocation objects meet the preset bandwidth allocation condition. The preset bandwidth allocation condition can be set according to actual network conditions such that the bandwidths belong to any one of non-overlapping, partial overlapping or complete overlapping. Therefore, according to an embodiment of the present disclosure, it is possible to proactively allocate the bandwidth to the designated allocation objects, thereby improving the efficiency of bandwidth allocation management. Further, it is possible to detect the occurrence of the transmission conflict between the designated allocation objects under the condition that the bandwidth allocations of the designated allocation objects are overlapped with each other. And the designated allocation objects can be separated under the condition that the bandwidth allocations of the designated allocation objects do not overlap with each other to reduce or eliminate the influence on each other, thus making up for the technical gap in related methods.

It should be noted that the setting of preset bandwidth allocation conditions can have different implementations, and no restriction is posed thereto here. In an example, preset bandwidth allocation conditions are set in advance. When the designated allocation objects across different transmission channels are determined, bandwidth allocation can be performed on the designated allocation objects across different transmission channels according to the preset bandwidth allocation conditions. In another example, the bandwidth allocation is monitored for each object to be allocated across different transmission channels in real time, and then the corresponding preset bandwidth allocation conditions are set accordingly.

It should be noted that the bandwidths obtained by different designated allocation objects belong to any one of non-overlapping, partial overlapping or complete overlapping with each other, which is not a restriction on the preset bandwidth allocation conditions. It can be understood by those having ordinary skills in the art that in practical application scenarios, the bandwidth allocated to different designated allocation objects can be determined to any one of the above cases, according to factors such as network conditions. It is possible that the bandwidth that may need to be allocated is not excluded from the above three cases, and no restriction is posed thereto here. Several implementations are provided below to illustrate operations S110 to S120 for better understanding of the operating principle and workflow.

In an embodiment of the present disclosure, operation S120 may include but is not limited to operation S121.

At operation S121, the OLT performs bandwidth allocation to the designated allocation objects across different transmission channels according to at least one of, a received ranging result, a received optical power, and an identified signal conflict.

In this operation, the OLT has the functions of ranging result reception, optical power reception and signal conflict determination. Therefore, the OLT can allocate bandwidth to the designated allocation objects in different transmission channels according to at least one of, the received ranging results, the received optical power, and the determined signal conflict situation, so as to improve the efficiency of bandwidth allocation management. That is to say, in specific application scenarios, there are many specific implementations of bandwidth allocation by the OLT, which will be illustrated one by one.

It should be noted that the ranging result can be, but is not limited to, the ranging result of ONUs relative to OLT. The ranging can be done by the those having ordinary skills in the art according to the currently well-known technology, and which is not further described here.

It should be noted that the optical power can be, but is not limited to, the optical power of ONU, and the measurement of the optical power of ONU can be carried out by a person skilled in the art according to the currently well-known technology at present, and which is not further described here.

It should be noted that the signal conflict situation can be employed to measure the bandwidth overlap of different designated allocation objects. Hence, the OLT can evaluate the bandwidth situation of different designated allocation objects through the determined signal conflict situation, so as to allocate bandwidth to the designated allocation objects in different transmission channels based on the bandwidth situation.

According to an embodiment of the present disclosure, based on operation S121, the method further includes but is not limited to operation S130.

At operation S130, OLT sends the bandwidth allocation result to the network management system, in response to the acquisition of the bandwidth allocation result, such that the network management system determines whether the bandwidth allocation result meets the preset bandwidth allocation requirements according to the bandwidth allocation result, or the network management system displays the bandwidth allocation result.

In this operation, after acquiring the bandwidth allocation result, the OLT sends the acquired bandwidth allocation result to the network management system, such that the network management system can determine whether the bandwidth allocation result meets the preset bandwidth allocation requirement according to the bandwidth allocation result, so as to verify the accuracy of the bandwidth allocation result and prevent the problem of bandwidth allocation mismatch. Alternatively, the network management system displays the bandwidth allocation result to notify the operator that the bandwidth allocation in the current scene has been completed. That is, by sending the bandwidth allocation result to the network management system through OLT, the bandwidth allocation result can be further checked or visually presented to meet the bandwidth allocation requirements.

It should be noted that a variety of network management systems can be provided, and the present disclosure is not limited a specific type of network management system. For example, the network management system can be, but is not limited to, various types of network management systems known to those having ordinary skills in the art, etc. For another example, the network management system can also be a network management system adapted to specific application scenarios.

In an embodiment of the present disclosure, operation S120 may include but is not limited to operation S122.

At operation S122, the network management system allocates bandwidth to the designated allocation objects in different transmission channels.

In this operation, because the network management system is highly integrated and stable in performance, the network management system is served as a coordinating entity to allocate bandwidth to the designated allocation objects in different transmission channels, so as to obtain the bandwidth allocation results adapted to the designated allocation objects in different transmission channels.

In an embodiment, the network management system is arranged separately with respect to the OLT. For example, the network management system and the OLT are arranged in two separate computer rooms or apparatus. As an entity for coordinating bandwidth allocation, the network management system can generate an allocation instruction for allocating bandwidth to designated allocation objects across different transmission channels. For example, the allocation instruction can be allocating corresponding bandwidth to one ONU (e.g., ONU1), while no bandwidth is allocated to another ONU (e.g., ONU2). Then the network management system sends the allocation instruction to the OLT. The OLT then allocates the corresponding bandwidth for ONU1 and ONU2 according to the allocation instruction.

In another embodiment, the network management system is arranged in cooperation with the OLT. For example, the network management system and the OLT are arranged in an integrated computer room or apparatus. The network management system and the OLT cooperate as an entity for coordinating bandwidth allocation. The network management system can generate an allocation instruction for allocating bandwidth to designated allocation objects across different transmission channels. For example, the allocation instruction can be: allocating corresponding bandwidth to one ONU (e.g., ONU1), while no bandwidth is allocated to another ONU (e.g., ONU2). Then the network management system sends the allocation instruction to the OLT. The OLT then allocates the corresponding bandwidth for ONU1 and ONU2 according to the allocation instruction.

In another embodiment, each transmission channel is provided with a respective bandwidth allocation node. For example, ONU1 is provided with a bandwidth allocation node #1, and ONU2 is provided with a bandwidth allocation node #2. The network management system, OLT and the bandwidth allocation node on each transmission channel are set in coordination. For example, the network management system, OLT and bandwidth allocation node on each transmission channel are arranged in an integrated computer room or device, and the network management system, OLT and bandwidth allocation nodes on each transmission channel are incorporated as an entity for coordinating bandwidth allocation. The network management system can generate an allocation instruction to allocate bandwidth to designated allocation objects over different transmission channels. For example, the allocation instruction may be, allocating corresponding bandwidth to one ONU (e.g., ONU1) and preventing from allocating bandwidth to another ONU (e.g., ONU2). Then the network management system sends the allocation instruction to the OLT which in turn sends the allocation instruction to the bandwidth allocation node on each transmission channel respectively. As such, the bandwidth allocation node on each transmission channel can perform bandwidth allocation respectively. For example, bandwidth allocation node #1 allocates corresponding bandwidth for ONU1 and bandwidth allocation node #2 does not allocate bandwidth for ONU2.

In an embodiment of the present disclosure, operation S120 may include but is not limited to a subsequent operation S140.

At operation S140, the bandwidth allocation result is displayed through the network management system.

In this operation, the bandwidth allocation result is displayed through the network management system, which can be visually presented to meet the bandwidth allocation requirements.

In an embodiment of the present disclosure, operation S120 may include but is not limited to operation S123.

At operation S123, bandwidth allocation is performed on the designated allocation objects in different transmission channels within the target bandwidth area; or, the bandwidth allocation is prevented from being performed to the designated allocation object in the target transmission channel in the target bandwidth area; or, the location of bandwidth allocation is specified for the specified allocation objects in different transmission channels.

In this operation, in a specific application scenario, when confirming the target bandwidth area, it is possible to choose whether to allocate bandwidth to the designated allocation objects in different transmission channels based on the target bandwidth area. Alternatively, it is possible to specify the location of bandwidth allocation to the designated allocation objects in different transmission channels, so that the bandwidth obtained by each designated allocation object meets the preset bandwidth allocation conditions, thereby improving the efficiency of bandwidth allocation management. And it is possible to detect whether a transmission conflict occurs between the designated allocation objects under the condition that the bandwidth allocations of the designated allocation objects are overlapped with each other. The designated allocation objects can be separated under the condition that the bandwidth allocations of the designated allocation objects do not overlap with each other to reduce or eliminate the influence on each other.

It should be noted that the target bandwidth area corresponds to the preset bandwidth allocation condition. That is, the determined target bandwidth area also conforms to the preset bandwidth allocation condition. Hence, the bandwidth allocation in the target bandwidth area enables the bandwidths obtained by different designated allocation objects to conform to the preset bandwidth allocation condition. Since the determination of the target bandwidth area is well known to those having ordinary skills in the art, and which will not be described in detail here.

In an embodiment of the present disclosure, operation S120 may include a subsequent operation S150, which will be illustrated below in greater details.

At operation S150, the OLT sends the bandwidth allocation result to designated allocation objects in different transmission channels, such that the designated allocation objects can obtain their respective allocated bandwidths on their respective transmission channels and send uplink data to the OLT within the limit of their respective allocated bandwidths.

In this operation, the OLT sends the bandwidth allocation result to the designated allocation objects over different transmission channels, such that the designated allocation objects can obtain their respective allocated bandwidths on their respective transmission channels. As such, the designated allocation objects can send uplink data to the OLT within their respective allocated bandwidths, so as to facilitate the bandwidth adjustment of the designated allocation objects over different transmission channels through signal conflicts generated by uplink data transmission in the subsequent operations.

In an embodiment of the present disclosure, as shown in FIG. 2, operation S120 may include but is not limited to operations S124, and S125.

At operation S124, an external adjustment operation is performed, such that designated allocation objects across different transmission channels generate signal conflicts during transmission of uplink data.

At operation S125, bandwidth allocation is performed to the designated allocation objects across different transmission channels, such that no signal conflict occurs during transmission of uplink data by the designated allocation objects in different transmission channels.

In this operation, an external adjustment operation is performed, such that signal conflicts occurs during uplink data transmissions by the designated allocation objects in different transmission channels. Hence, bandwidth allocation is carried out for the designated allocation objects in different transmission channels with the signal conflict considered, so as to eliminate signal conflict during subsequent uplink data transmissions by the designated allocation objects. That is, by constructing a signal conflict scene during the uplink data transmission to carry out bandwidth allocation for addressing the signal conflict issue, a good bandwidth allocation result can be obtained.

It should be noted that no limitation is posed to the implementation of external adjustment operation herein. For example, a human operator sets the specific operation content in advance. The specific operation content can be carried out when receiving the notification of the transmissions of uplink data by different designated allocation objects. In another example, a human operator sets the specific operation content in advance and integrates the specific operation content into a relevant smart device. Then, when the relevant smart device detects that the designated allocation objects across different transmission channels are sending uplink data, the relevant smart device can perform external adjustment operations.

In an embodiment, the external adjustment operation includes at least one of,
increasing the length of the optical fiber corresponding to the target transmission channel;
reducing the length of the optical fiber corresponding to the target transmission channel;
increasing the optical power of the designated allocation object in the target transmission channel;
reducing the optical power of the designated allocation object in the target transmission channel;
increasing the line loss corresponding to the target transmission channel; and
reducing the line loss corresponding to the target transmission channel.

It should be noted that in addition to the above-described adjustments to the length of optical fiber corresponding to the target transmission channel, the optical power of the designated allocation object in the target transmission channel or the line loss corresponding to the target transmission channel, those having ordinary skills in the art can also set or select corresponding external adjustment operations according to the specific scene requirements, and the present disclosure is not limited thereto.

**In** an embodiment of the present disclosure, operation S120 may include but is not limited to operation S126.

At operation S126, bandwidth allocation is performed to the designated allocation objects in different transmission channels, such that the bandwidths obtained by different designated allocation objects meet the preset bandwidth allocation condition within a preset period.

**In** this operation, bandwidth allocation is performed on the designated allocation objects across different transmission channels, such that the bandwidths obtained by different designated allocation objects meet the preset bandwidth allocation condition. Since the preset bandwidth allocation conditions can be configured according to the adaptation to the preset period, when bandwidth allocation is performed on the designated allocation objects in different transmission channels, the bandwidths obtained by different designated allocation objects can meet the preset bandwidth allocation conditions within the preset period. The improvement of the efficiency of bandwidth allocation management is achieved. Further, it is possible to detect the occurrence of the transmission conflict between the designated allocation objects under the condition that the bandwidth allocations of the designated allocation objects are overlapped with each other. And the designated allocation objects can be separated under the condition that the bandwidth allocations of the designated allocation objects do not overlap with each other to reduce or eliminate the influence on each other, thus making up for the technical gap in related methods.

It should be noted that the setting of the preset period can have different implementations, and the present disclosure is not limited thereto. For example, a period is determined in advance as a preset period, and bandwidth allocation is performed with the preset period considered. For another example, the data of relevant historical periods (such as 1 day, 1 month, 1 quarter, etc.) of designated allocation objects in different transmission channels are counted in advance, such that the preset period is determined according to the data of relevant historical periods, and then bandwidth allocation is carried out with the preset period considered.

In an embodiment, under the condition that the bandwidths obtained by different designated allocation objects do not overlap with each other, the preset bandwidth allocation conditions further include:
bandwidths obtained by different designated allocation objects are dispersed in temporal sequence.

It should be noted that the bandwidths obtained by different designated allocation objects do not overlap with each other, that is, the designated allocation objects in different transmission channels do not affect each other. As a result, the bandwidths of the designated allocation objects in different transmission channels can be set to be dispersed with each other in temporal sequence, thus improving the efficiency of bandwidth allocation management.

In another embodiment, when the bandwidths obtained by different designated allocation objects are partially overlapped, and the overlapped part is less than the first threshold, the preset bandwidth allocation condition further includes:
OLT supports error correction for transmission conflicts caused by partial overlapping of bandwidths.

It should be noted that in some cases, the bandwidths obtained by different designated allocation objects are partially overlapped, and the overlapped part is less than the first threshold. That is, the designated allocation objects across different transmission channels will affect each other, but the overlapped part is not too many, that is, the overlapped part belongs to a relatively small range. Thus, in the case of a transmission conflict with a small range and relatively small impact due to the partial overlapping of bandwidths, the OLT itself can support the error correction processing of the transmission conflict without external resort, so as to improve the management efficiency of the bandwidth allocation management.

It should be noted that the first threshold can be set by those having ordinary skills in the art according to the practical scene, and no limitation is posed thereto. For example, a parameter is predetermined as the first threshold, and the preset bandwidth allocation conditions are set with the first threshold taken into consideration. For another example, the historical statistical bandwidth data of the designated allocation object across different transmission channels is acquired in advance, so as to set the relevant first threshold according to the relevant historical statistical bandwidth data.

In another embodiment, when the bandwidths obtained by different designated allocation objects are partially overlapped, and the overlapped part is greater than the second threshold, the method further includes but is not limited to operation S160.

At operation S160, conflict detection is performed on different designated allocation objects to determine if a transmission conflict occurs between different designated allocation objects.

In this operation, the bandwidths obtained by different designated allocation objects are partially overlapped, and the overlapped part is greater than the second threshold, that is, the designated allocation objects across different transmission channels will influence each other. The overlapped part is relatively large, that is, the overlapped part belongs to a relatively large range, so the situation of transmission conflict caused by the partially overlapped bandwidths will be more complicated. Therefore, by carrying out conflict detection on different designated allocation objects, a determination can be made as to whether a transmission conflict occurs between different designated allocation objects, such that, in the subsequent operations, a further bandwidth allocation can be performed selectively to different designated allocation objects having transmission conflict according to the determination as to whether a transmission conflict occurs.

In an implementation, the second threshold is not less than the first threshold discussed in the above embodiment. The overlapping degree of bandwidths of different designated allocation objects can be determined according to the first threshold and the second threshold, so as to evaluate the degree of mutual influence between different designated allocation objects more accurately.

It should be noted that the second threshold can be set by those having ordinary skills in the art according to the practical scene, and no limitation is posed thereto. For example, a parameter is predetermined as the second threshold, and the preset bandwidth allocation conditions are set with the second threshold taken into consideration. For another example, the historical statistical bandwidth data of the designated allocation object across different transmission channels is acquired in advance, so as to set the relevant second threshold according to the relevant historical statistical bandwidth data.

In another embodiment, when the bandwidths obtained by different designated allocation objects are completely overlapped, the method further includes but is not limited to operation S170.

At operation S170, conflict detection is performed on different designated allocation objects to determine if a transmission conflict occurs between different designated allocation objects.

In this operation, the bandwidths obtained by different designated allocation objects are entirely overlapped, that is, the designated allocation objects across different transmission channels will definitely influence each other. Hence, the situation of transmission conflict caused by the entirely overlapped bandwidths will be more complicated. Therefore, by carrying out conflict detection on different designated allocation objects, a determination can be made as to whether a transmission conflict occurs between different designated allocation objects, such that, in the subsequent operations, a further bandwidth allocation can be performed to different designated allocation objects having transmission conflict according to the determination as to whether a transmission conflict occurs.

In an embodiment of the present disclosure, operation S170 may include but is not limited to operation S171.

At operation S171, conflict detection is performed on different designated allocation objects during an operation and maintenance process or a fault diagnosis process to determine if a transmission conflict occurs between different designated allocation objects.

In this operation, it is found that the operation and maintenance scenarios of different designated allocation objects or the scenarios of fault diagnosis for different designated allocation objects are relatively complex application scenarios. Hence, it is relatively more important to determine transmission conflicts in these scenarios. Thus, in the operation and maintenance process or the fault diagnosis process, it is possible to better understand and evaluate the bandwidth characteristics of different designated allocation objects by detecting conflicts between different designated allocation objects to determine whether transmission conflicts occur between different designated allocation objects, so as to facilitate the possible further bandwidth allocation for different designated allocation objects in subsequent operations.

Several embodiments are provided below to illustrate the application scenario and principle of operation S170.

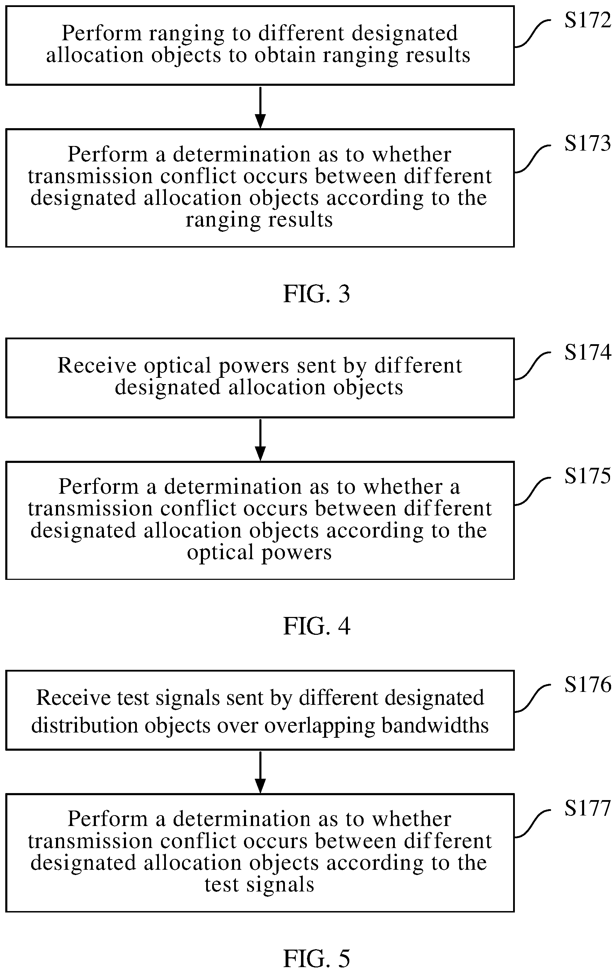

In an embodiment of the present disclosure, as shown in FIG. 3, operation S170 may include but is not limited to operations S172, and S173.

At operation S172, ranging is performed on different designated allocation objects to obtain ranging results.

At operation S173, a determination is performed as to whether transmission conflict occurs between different designated allocation objects according to the ranging result.

In this operation, the ranging results are obtained by ranging different designated allocation objects, so that a determination can be made as to whether a transmission conflict occurs between different designated allocation objects according to the ranging results. As such, in the subsequent operations, a further bandwidth allocation can be performed to different designated allocation objects having transmission conflict according to the determination as to whether a transmission conflict occurs.

In an embodiment of the present disclosure, operation S173 may include but is not limited to operation S1731.

At S1731, in response to a presence of a ranging result array indicating a distance difference greater than or equal to a preset distance threshold in the ranging results, a determination is made that a transmission conflict occurs between the designated allocation objects corresponding to the ranging result array; alternatively, in response to the distance difference between every two ranging results is less than the preset distance threshold, a determination is made that no transmission conflict occurs between different designated allocation objects.

In this operation, by comparing the distance difference in the ranging result with the preset distance threshold, it can be determined that a transmission conflict occurs between the corresponding designated allocation objects when the distance difference in the ranging result is greater than or equal to the preset distance threshold, or no transmission conflict occurs between the corresponding designated allocation objects when the distance difference in the ranging result is less than the preset distance threshold. That is, with the provision of the ranging result array of the preset distance threshold, it is helpful to accurately determine the transmission conflict between the designated allocation objects. As such, in the subsequent operations, a further bandwidth allocation can be performed selectively to different designated allocation objects having transmission conflict according to the determination as to whether a transmission conflict occurs.

It should be noted that a ranging result array may include, but is not limited to, several preset distance thresholds. That is, in a specific application scenario, one of several preset distance thresholds pre-stored in the ranging result array may be selected as the preset distance threshold in this scenario, so as to carry out a good determination based on the preset distance threshold.

It should be noted that the distance difference of several ranging results can be indicative of the logical distance between different designated allocation objects. When the logical distance is employed for determination, the preset distance threshold can be changed to match and determine. The preset distance threshold can be set by those having ordinary skills in the art according to the practical scenarios, and no limitation is posed thereto here. For example, a parameter is determined in advance as a preset distance threshold. A signal conflict determination is made with the preset distance threshold taken into consideration. For another example, the historical statistical ranging result data of the designated allocation object across different transmission channels is acquired in advance, so as to set the relevant preset distance threshold according to the relevant historical statistical ranging result data.

In an embodiment of the present disclosure, as shown in FIG. 4, operation S170 may include but is not limited to operations S174, and S175.

At operation S174, optical powers sent by different designated allocation objects are received.

At operation S175, a determination is performed as to whether a transmission conflict occurs between different designated allocation objects according to the optical powers.

In this operation, the optical powers sent by different designated allocation objects are received, so that a determination can be made as to whether a transmission conflict occurs between different designated allocation objects according to the optical power. As such, in the subsequent operations, a further bandwidth allocation can be performed selectively to different designated allocation objects having transmission conflict according to the determination as to whether a transmission conflict occurs.

In an embodiment of the present disclosure, operation S175 may include but is not limited to operation S1751.

At operation S1751, in response to a presence of an optical power array indicating a power difference greater than or equal to a preset power threshold in the optical powers, a determination is made that a transmission conflict occurs between the designated allocation objects corresponding to the optical power array; alternatively, in response to the optical power difference between every two optical powers is less than the preset power threshold, a determination is made that no transmission conflict occurs between different designated allocation objects.

In this operation, by comparing the optical power difference in the optical powers with the preset power threshold, it can be determined that a transmission conflict occurs between the corresponding designated allocation objects when the optical power difference in the optical powers is greater than or equal to the preset power threshold, or no transmission conflict occurs between the corresponding designated allocation objects when the optical power difference in the optical powers is less than the preset power threshold. That is, with the provision of the preset power thresholds, it is helpful to accurately determine the transmission conflict between the designated allocation objects. As such, in the subsequent operations, a further bandwidth allocation can be performed selectively to different designated allocation objects having transmission conflict according to the determination as to whether a transmission conflict occurs.

It should be noted that the preset power threshold can be set by those having ordinary skills in the art according to the practical scene, and no limitation is posed thereto. For example, a parameter is determined in advance as a preset power threshold. A signal conflict determination is made with the preset power threshold taken into consideration. For another example, the historical statistical optical power data of the designated allocation object across different transmission channels is acquired in advance, so as to set the relevant preset power threshold according to the relevant historical statistical optical power data.

In an embodiment of the present disclosure, as shown in FIG. 5, operation S170 may include but is not limited to operations S176, and S177.

At operation S176, test signals sent by different designated allocation objects over overlapping bandwidths are received.

At operation S177, a determination is performed as to whether transmission conflict occurs between different designated allocation objects according to the test signals.

In this operation, the test signals sent by different designated allocation objects over the overlapping bandwidths are received, so that a determination can be made as to whether a transmission conflict occurs between different designated allocation objects according to the test signals. As such, in the subsequent operations, a further bandwidth allocation can be performed selectively to different designated allocation objects having transmission conflict according to the determination as to whether a transmission conflict occurs.

In an embodiment of the present disclosure, operation S177 may include but is not limited to operation S1771.

At operation S1771, in response to a bit error increment being greater than or equal to the third threshold according to the test signals, it is determined that a transmission conflict occurs between different designated allocation objects; alternatively, in response to the bit error increment being less than the third threshold according to the test signal, it is determined that no transmission conflict occurs between different designated allocation objects.

In this operation, by comparing the bit error increment with the third threshold, it can be determined that a transmission conflict occurs between the corresponding designated allocation objects when the bit error increment is greater than or equal to the third threshold, or no transmission conflict occurs between the corresponding designated allocation objects when the bit error increment is less than the third threshold. That is, with the provision of the third threshold, it is helpful to accurately determine the transmission conflict between the designated allocation objects. As such, in the subsequent operations, a further bandwidth allocation can be performed selectively to different designated allocation objects having transmission conflict according to the determination as to whether a transmission conflict occurs.

It should be noted that the third threshold can be set by those having ordinary skills in the art according to the practical scene, and no limitation is posed thereto. For example, a parameter is determined in advance as a third threshold. A signal conflict determination is made with the third threshold taken into consideration. For another example, the historical statistical bit error increment data of the designated allocation object across different transmission channels is acquired in advance, so as to set the relevant third threshold according to the relevant historical statistical bit error increment data.

In another embodiment, when a transmission conflict occurs between different designated allocation objects, the method further includes but is not limited to operation S180.

At operation S180, different bandwidths are allocated to different designated allocation objects, such that the bandwidths obtained by different designated allocation objects do not overlap with each other.

In this operation, due to the transmission conflicts between different designated allocation objects, that is the bandwidths of different designated allocation objects may influence each other, and different bandwidths are allocated to different designated allocation objects. As such, the bandwidths obtained by different designated allocation objects do not overlap with each other. Thus, the transmission conflicts between different designated allocation objects are addressed.

In an embodiment of the present disclosure, operation S120 may include but is not limited to operation S127.

At operation S127, centralized bandwidth allocation is performed on the designated allocation objects across different transmission channels; alternatively, independent bandwidth allocations are performed to designated allocation objects across different transmission channels.

In this operation, the bandwidth obtained by different designated allocation objects across different transmission channels can meet the preset bandwidth allocation conditions through centralized or independent bandwidth allocations, thus improving the efficiency of bandwidth allocation management. In the case of the overlapping of the allocated bandwidth of the designated allocation objects, it is possible to test whether a transmission conflict occurs between the objects. In the case of non-overlapping of the allocated bandwidth of the designated allocation objects, it is possible to isolate the designated allocation objects to reduce or eliminate their mutual influence, which can make up for the technical gap in related methods.

In the following, several example embodiments are provided in order to illustrate the process of the method for bandwidth allocation in greater details.

### EXAMPLE EMBODIMENT ONE

An external system, such as network management system sets non-overlapping bandwidths across different transmission channels in the coordinated bandwidth allocation, such that the bandwidth allocations of ONUs having potential conflicts across different transmission channels are dispersed in temporal sequence, thus mutual influence is avoided.

Potential conflicts between ONUs across different channels are identified and obtained through means external to the system. For example, during the installation, or the operation and maintenance, it is known which ONUs have shorter branches and which ONUs have longer branches. If the ONU branches across different channels are quite different, these ONUs can be classified as ONUs that may potentially influence each other. For another example, during a fault diagnosis, it is found or suspected that some ONUs across different channels have influence on each other, and these ONUs are identified and listed as ONUs with potential influence.

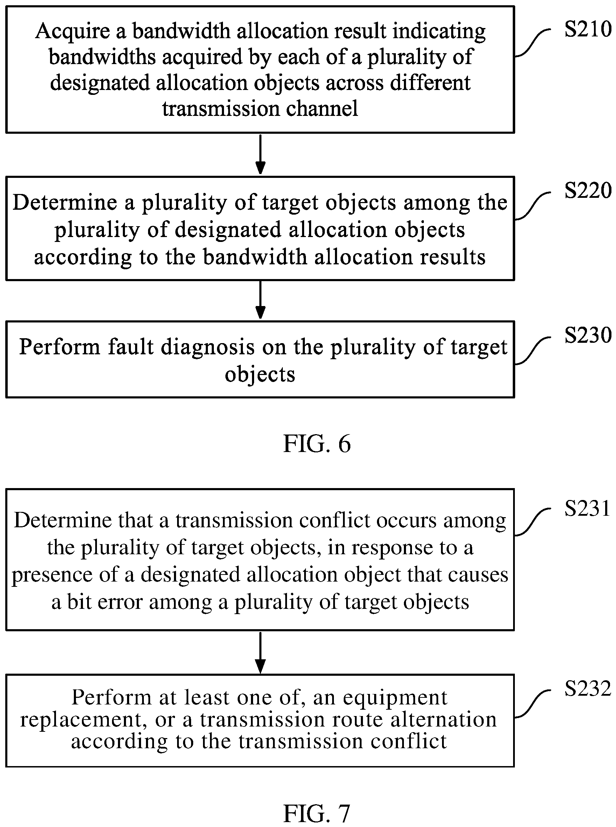

FIG. 6 depicts a flowchart showing a method for bandwidth allocation according to another embodiment of the present disclosure. The method may include but is not limited to operations S210, S220, and S230.

At operation S210, bandwidth allocation result obtained by designated allocation objects across different transmission channels is acquired.

It should be noted that different transmission channels support time synchronization. Thus, it is convenient to detect a plurality of target objects among the designated allocation objects across different transmission channels according to the feature of supporting time synchronization of different transmission channels, which will not be further described here, but will be described in greater details in the following embodiment(s).

In this operation, the bandwidth allocation result obtained by the designated allocation objects across different transmission channels is obtained, so as to facilitate the fault diagnosis of the designated allocation objects across different transmission channels based on the bandwidth allocation result in the subsequent operations.

In an implementation, the bandwidth allocation result can be obtained through the bandwidth allocation by for example, by an optical line terminal (OLT), to the designated allocation objects across different transmission channels according to at least one of, the received ranging result, the received optical power, and the determined signal conflict.

It should be noted that the ranging result can be, but is not limited to, the ranging result of ONUs relative to OLT. The ranging can be done by those having ordinary skills in the art according to the currently well-known technology, and which is not further described here.

It should be noted that the optical power can be, but is not limited to, the optical power of ONU, and the measurement of the optical power of ONU can be carried out by a person skilled in the art according to the currently well-known technology, and which is not further described here.

It should be noted that the signal conflict situation can be employed to measure the bandwidth overlap of different designated allocation objects. Hence, the OLT can evaluate the bandwidth situation of different designated allocation objects through the determined signal conflict situation, so as to allocate bandwidth to the designated allocation objects in different transmission channels based on the bandwidth situation.

In another implementation, the bandwidth allocation result is acquired through the bandwidth allocation performed by a network management system on the designated allocation objects across different transmission channels. That is, because the network management system is highly integrated and stable in performance, the network management system is served as a coordinating entity to allocate bandwidth to the designated allocation objects in different transmission channels, so as to obtain the bandwidth allocation result adapted to the designated allocation objects in different transmission channels.

It should be noted that a variety of network management systems can be provided, and the present disclosure is not limited a specific type of network management system. For example, the network management system can be, but is not limited to, various types of network management systems known to those having ordinary skills in the art, etc. For another example, the network management system can also be a network management system adapted to specific application scenarios.

In another implementation, the bandwidth allocation result is obtained by performing centralized bandwidth allocation on the plurality of designated allocation objects across different transmission channels. Alternatively, the bandwidth allocation result is obtained by performing independent bandwidth allocations on the plurality of designated allocation objects across different transmission channels.

At operation S220, a plurality of target objects are determined among the plurality of designated allocation objects according to the bandwidth allocation result.

In this operation, since the bandwidth allocation result obtained by the designated allocation object has been obtained in operation S210, the plurality of target objects can be determined among the different designated allocation objects according to the bandwidth allocation result in operation S220, so as to facilitate fault diagnosis processing for the plurality of target objects in the subsequent operations.

In an embodiment of the present disclosure, operation S220 may include but is not limited to operation S221.

At operation S221, a plurality of target objects having overlapping bandwidths are identified among different designated allocation objects according to the bandwidth allocation result.

In this operation, the overlapping of the bandwidths of different designated allocation objects indicates that the bandwidths of related designated allocation objects overlap, which may lead to great mutual influence. In view of this, in this situation, a plurality of designated allocation objects having overlapping in this part of bandwidths can be accurately identified as the target objects according to the bandwidth allocation result, so as to facilitate the fault diagnosis processing of the identified multiple target objects in the subsequent operations.

At operation S230, fault diagnosis is performed on the plurality of target objects.

Since a plurality of target objects have been determined in operation S220, in this operation S230, fault diagnosis processing is performed on the target objects, such that the bandwidth that meets the preset bandwidth allocation conditions can be obtained. That is, further bandwidth allocation can be further performed on the target objects across different transmission channels by performing fault diagnosis processing on the target objects. Hence, the bandwidth allocation problem of the target objects is addressed, and the efficiency of bandwidth allocation and management is improved. In addition, under the condition that the bandwidth allocation of multiple target objects is overlapping with each other, a detection for transmission conflict between the designated allocation objects can be performed. The multiple target objects can be separated under the condition that the bandwidth allocation of the target objects is non-overlapping, such that the mutual influence is reduced or eliminated, thus the technical gap in related methods is made up.

In an embodiment of the present disclosure, as shown in FIG. 7, operation S230 may include but is not limited to operations S231, and S232.

At operation S231, in response to a presence of a designated allocation object that causes a bit error among a plurality of target objects, it is determined that a transmission conflict occurs among the plurality of target objects.

At operation S232, at least one of, equipment replacement and a transmission route alternation is performed according to the transmission conflict.

In this operation, when a designated allocation object causing a bit error is present among multiple target objects, it can be determined that a transmission conflict occurs between the plurality of target objects. In this case, it is possible to alleviate the transmission conflict among the plurality of target objects through at least one of equipment replacement, and transmission route alternation according to parameters of the identified transmission conflict, such as, contents, type and status, or the like.

It should be noted that no limitations are posed to the equipment replacement, or transmission route alternation, which can be selected and set according to the practical application scenarios. For example, a device or a transmission route can be preset. Upon an identification of a transmission conflict between a plurality of target objects, the transmission conflict is processed based on the preset device or transmission route. For another example, a program or an instance that handles transmission conflicts can be preset. Upon an identification of a transmission conflict between the target objects, the program or instance can be initiated to handle the transmission conflicts.

In an embodiment of the present disclosure, operation S230 may include but is not limited to operation S233.

At operation S233, in response to an absence of a designated allocation object that causes a bit error among a plurality of target objects, it is determined that no transmission conflict occurs among the plurality of target objects.

In this operation, when no designated allocation object causing a bit error is present among multiple target objects, it can be determined that no transmission conflict occurs between the plurality of target objects. In this case, it is not necessary to address the transmission conflict among the plurality of target objects.

In an embodiment of the present disclosure, operation S230 may include but is not limited to operation S234.

At operation S234, an absence of the transmission conflict between the plurality of target objects is determined in response to a presence of a designated allocation object that causes a bit error among a plurality of target objects, and a support of an optical line terminal (OLT) for a correction processing of the bit error.

In this operation, the presence of a designated allocation object that cause a bit error among the target objects, indicates that the bandwidths of the target objects have mutual influence. That is, the bit error may be caused by the bandwidth influence. The OLT supports error correction processing, that is, the mutual influence of the bandwidths of the target objects is minor. Thus, the OLT can support error correction processing, so it can be determined that there is no transmission conflict among the target objects, and there is no need to handle the transmission conflict for the target objects.

Example Embodiment Two is given below to illustrate the workflow of method for bandwidth allocation according to an embodiment of the present disclosure.

### EXAMPLE EMBODIMENT TWO

In terms of the coordinated bandwidth allocation, the bandwidth allocation on different transmission channels is analyzed, the overlap between bandwidth allocations for ONUs across different transmission channels is checked, and conflict influence between ONUs across different transmission channels is detected with the conflict influence analysis on OLT side considered.

In an implementation, it is possible to check which ONUs of different transmission channels have overlapped bandwidth allocations, with no influence or serious influence on each other. No influence means that there is no influence on each other, and there is no reception bit error on the OLT side. No serious influence means that there is influence on each other, for example, there is reception bit error on the OLT side, but the OLT side can correct the bit error.

These bandwidth allocation results can be analyzed to check out which ONUs of different transmission channels have overlapped bandwidth allocations that affect each other, for trouble shooting. After trouble shooting is done, evasive measures, such as ONU replacement or ODN branch alternation, can be taken to eliminate the problem.

The coordinated bandwidth allocation requires bandwidth allocation results across different transmission channels to identify the temporal sequence relationship. As a result, the identification of the overlapping between ONU bandwidth allocations across different transmission channels can be realized through time synchronization. In the coordinated bandwidth allocation, the bandwidth allocation for different channels can be independent, there is no interaction with each other (except for the function required for time sequence relationship identification). Alternatively, the bandwidth allocation can be integrated.

In the following, several specific application scenarios are provided in order to illustrate the process of the method for bandwidth allocation in greater details.

### EXAMPLE EMBODIMENT THREE

An external system, such as network management system sets non-overlapping bandwidths across different transmission channels in the coordinated bandwidth allocation, such that the bandwidth allocations of ONUs having potential conflicts across different transmission channels are dispersed in temporal sequence, thus mutual influence is avoided.

Potential conflicts between ONUs across different channels are identified and obtained through means external to the system. For example, during the installation, or the operation and maintenance, it is known which ONUs have shorter branches and which ONUs have longer branches. If the ONU branches across different channels are quite different, these ONUs can be classified as ONUs that may potentially influence each other. For another example, during a fault diagnosis, it is found or suspected that some ONUs across different channels have influence on each other, and these ONUs are identified and listed as ONUs with potential influence.

### EXAMPLE EMBODIMENT FOUR

By comparing the ranging results, the ONUs whose ranging results are quite different in different transmission channels can be identified. For example, for the ONUs with the logical distance difference reflected by ranging results is more than 15 kilometers, their bandwidths are dispersed and do not overlap each other in the coordinated bandwidth allocation. It is clear that, the difference threshold of ranging results can be set according to the specific situation. If the requirements are stricter, the value can be set smaller, and the value can be set larger for loosen requirements.

ONU generally performs ranging, and OLT compares the ranging results of ONU in each transmission channel. If the ranging results or corresponding logical distances of ONUs in different transmission channels have greater difference, the allocated bandwidths of these ONUs are dispersed by coordinated bandwidth allocation.

### EXAMPLE EMBODIMENT FIVE

By means of the receiving optical power at the OLT side, the ONUs having relatively large difference in receiving optical power in different transmission channels can be identified. For example, for the ONUs with the receiving optical power difference greater than 15 dB, their bandwidths are dispersed and do not overlap each other in the coordinated bandwidth allocation. It is clear that, the receiving optical power difference threshold can be set according to the specific situation. If the requirements are stricter, the value can be set smaller, and the value can be set larger for loosen requirements.

OLT tests and compares the receiving optical power of ONUs in different transmission channels. For those ONUs having receiving optical power difference in different transmission channels, their allocated bandwidth allocations are dispersed in the coordinated bandwidth allocation.

### EXAMPLE EMBODIMENT SIX

It may not be very accurate to determine that ONUs in different channels may have influence on each other through Example Embodiment 3, 4 and 5, so it may be necessary to set many ONU bandwidth allocations that may have influence but actually have no influence in the coordinated bandwidth allocation.

In this example, ONUs across different transmission channels that may be influenced can send test signals in overlapping bandwidth. The OLT can determine whether an influence occurs between them through detection. If no apparent bit error increment is found on the OLT side, it is considered that there is no influence between them, otherwise it is considered that influence occurs between them. It is apparent that, the test can be repeated for several times before determining an influence occurs in order to improve the accuracy.

Through dynamic testing, the OLT identifies the ONUs that are subjected to the influence across different transmission channels and their allocated bandwidths are dispersed. If necessary, these ONUs can be subjected to successive dynamic testing.

### EXAMPLE EMBODIMENT SEVEN

At least four transmission channels are defined in the TWDM-PON system, and the bandwidth allocation of each transmission channel is prepared and realized according to the above example embodiments. The coordinated bandwidth allocation is configured through Example embodiment 3, 4, 5, or 6. Alternatively, the coordinated bandwidth allocation can be implemented according to Example embodiment 2.

### EXAMPLE EMBODIMENT EIGHT

In the coexistence system of the evolution and upgrading from G-PON to XG(S)-PON, the OLT side provides a combo optical module to support both GPON and XG(S)-PON. The bandwidth allocation of

GPON and XG(S)-PON is realized according to Example embodiment 1. The coordinated bandwidth allocation is configured through Example embodiment 3, 4, 5, or 6. Alternatively, the coordinated bandwidth allocation can be implemented according to Example embodiment 2.

### EXAMPLE EMBODIMENT NINE

In the coexistence system of the evolution and upgrading from G-PON/XG(S)-PON to 50G-PON, the OLT side provides a combo optical module to support both GPON/XG(S)-PON and 50G-PON. The bandwidth allocation of GPON/XG(S)-PON and 50G-PON, is realized according to Example embodiment 1. The coordinated bandwidth allocation is configured through Example embodiment 3, 4, 5, or 6. Alternatively, the coordinated bandwidth allocation can be implemented according to Example embodiment 2.

According to an embodiment of the present disclosure, an apparatus for bandwidth allocation is provided. The apparatus includes a memory, a processor and a computer program stored in the memory and executable by the processor which, when executed by the processor causes the processor to carry out any one of the methods as described above.

According to an embodiment of the present disclosure, a computer-readable storage medium is provided. The computer-readable storage medium stores a computer-executable instruction which, when executed by a processor, causes the processor to carry out any one of the methods as described above.

According to an embodiment of the present disclosure, a computer program product is provided. The computer program product includes a computer program, or a computer instruction stored in a computer-readable storage medium which, when executed by a processor of a computer device, causes the computer device to carry out any one of the methods as described above.

It shall be appreciated by a person having ordinary skills in the art that all or some of the operations and systems disclosed above can be implemented as software, firmware, hardware and their appropriate combinations. Some or all physical components can be implemented as software executed by a processor, such as a central processing unit, a digital signal processor or a microprocessor, or as hardware, or as an integrated circuit, such as an application specific integrated circuit. Such software can be distributed on computer-readable media, which can include computer storage media (or non-transitory media) and communication media (or transitory media). As is well known to a person having ordinary skills in the art, the term computer storage medium includes volatile and nonvolatile, removable and non-removable medium implemented in any method or technology for storing information such as computer readable instructions, data structures, program modules or other data. Computer storage medium includes, but is not limited to, RAM, ROM, EEPROM, flash memory or other memory technologies, CD-ROM, digital versatile disks (DVD) or other optical disk storage, magnetic boxes, tapes, magnetic disk storage or other magnetic storage devices, or any other medium that can be configured to store desired information and accessible by a computer. Furthermore, it is well known to those having ordinary skills in the art that communication media usually contains computer-readable instructions, data structures, program modules or other data in modulated data signals such as carrier waves or other transmission mechanisms, and can include any information delivery media.

Described above is a description of several embodiments of the present disclosure, but the present disclosure is not limited to the above embodiments. Those having ordinary skills in the art can make various equivalent modifications or substitutions without departing the scope of the present disclosure, and these equivalent modifications or substitutions are within the scope defined by the claims of the present disclosure.

## Claims

1. A method for bandwidth allocation, comprising:
performing bandwidth allocation to each of a plurality of designated allocation objects across different transmission channels, such that the bandwidths obtained by the plurality of designated allocation objects meet a preset bandwidth allocation condition;
wherein, the preset bandwidth allocation condition comprises one of,
non-overlapping, partial overlapping, or complete overlapping of the bandwidths obtained by the plurality of designated allocation objects.

2. The method according to claim 1, wherein performing bandwidth allocation to each of the plurality of designated allocation objects across different transmission channels comprises:
performing, by an optical line terminal (OLT), the bandwidth allocation to each of the plurality of designated allocation objects across different transmission channels according to at least one of, a received ranging result, a received optical power, and a determined signal conflict.

3. The method according to claim 2, further comprising:
sending, by the OLT, a bandwidth allocation result to a network management system, in response to an acquisition of the bandwidth allocation result, such that the network management system determines whether the bandwidth allocation result meets a preset bandwidth allocation requirement according to the bandwidth allocation result, or the network management system displays the bandwidth allocation result.

4. The method according to claim 1, wherein performing bandwidth allocation to each of the plurality of designated allocation objects across different transmission channels comprises:
performing, by a network management system, bandwidth allocation to each of the plurality of designated allocation objects across different transmission channels.

5. The method according to claim 4, further comprising:
displaying the bandwidth allocation result through the network management system.

6. The method according to claim 1, wherein performing bandwidth allocation to each of the plurality of designated allocation objects across different transmission channels comprises:
performing bandwidth allocation to each of the plurality of designated allocation objects across different transmission channels within a target bandwidth area;
or,
preventing bandwidth allocation from being performed to each of the plurality of designated allocation objects across different transmission channels within the target bandwidth area;
or,
specifying a position of bandwidth allocation for each of the plurality of designated allocation objects across different transmission channels.

7. The method according to claim 1, wherein after performing bandwidth allocation to each of the plurality of designated allocation objects across different transmission channels, the method further comprises:
sending, by an OLT, a bandwidth allocation result to each of the plurality of designated allocation objects across different transmission channels, such that each of the designated allocation objects acquires a respective allocated bandwidth on the respective transmission channel and sends uplink data to the OLT within the respective allocated bandwidth.

8. The method according to claim 1, wherein performing bandwidth allocation to each of the plurality of designated allocation objects across different transmission channels comprises:
performing an external adjustment operation, such that a signal conflict is generated during uplink data transmissions by the plurality of designated allocation objects across different transmission channels; and
performing bandwidth allocation to each of the plurality of designated allocation objects across different transmission channels, such that no signal conflict occurs during uplink data transmissions by the plurality of designated allocation objects across different transmission channels.

9. The method according to claim 8, wherein the external adjustment operation comprises at least one of,
increasing a length of an optical fiber corresponding to a target transmission channel;
reducing the length of the optical fiber corresponding to the target transmission channel;
increasing an optical power of a designated allocation object in the target transmission channel; reducing the optical power of the designated the network management system object in the target transmission channel;
increasing a line loss corresponding to the target transmission channel; or
reducing the line loss corresponding to the target transmission channel.

10. The method according to claim 1, wherein performing bandwidth allocation to each of the plurality of designated allocation objects across different transmission channels, such that the bandwidths obtained by the plurality of designated allocation objects meet the preset bandwidth allocation condition comprises:
performing bandwidth allocation to each of the plurality of designated allocation objects across different transmission channels, such that the bandwidths obtained by the plurality of designated allocation objects meet the preset bandwidth allocation condition within a preset period.

11. The method according to claim 1, wherein, when bandwidths obtained by different designated allocation objects do not overlap with each other, the preset bandwidth allocation condition further comprises:
the bandwidths obtained by the plurality of designated allocation objects are dispersed in temporal sequence.

12. The method according to claim 1, wherein, in response to a partial overlapping of the bandwidths obtained by different designated allocation objects being less than a first threshold, the preset bandwidth allocation condition further comprises:
an OLT supports an error correction for transmission conflict caused by the partial overlapping of the bandwidths.

13. The method according to claim 1, wherein, in response to a partial overlapping of the bandwidths obtained by different designated allocation objects being greater than a second threshold, or in response to complete overlapping of the bandwidths, the preset bandwidth allocation condition further comprises:
performing conflict detection on the plurality of designated allocation objects to determine if a transmission conflict occurs between the plurality of designated allocation objects.

14. The method according to claim 13, wherein performing conflict detection on the plurality of designated allocation objects to determine if the transmission conflict occurs between the plurality of designated allocation objects comprises:
performing conflict detection on the designated allocation objects during an operation and maintenance process or a fault diagnosis process to determine if transmission conflict occurs between the designated allocation objects.

15. The method according to claim 13, wherein performing conflict detection on the plurality of designated allocation objects to determine if the transmission conflict occurs between the plurality of designated allocation objects comprises:
performing ranging to each of the plurality of designated allocation objects to obtain a plurality of ranging results; and
determining whether transmission conflict occurs between the plurality of designated allocation objects according to the ranging results.

16. The method according to claim 15, wherein determining whether transmission conflict occurs between the plurality of designated allocation objects according to the ranging results comprises:
determining transmission conflict occurs between a subset of the designated allocation objects corresponding to a ranging result array, in response to a presence of the ranging result array indicating a distance difference greater than or equal to a preset distance threshold in the ranging results;
or,
determining no transmission conflict occurs between the subset of the designated allocation objects, in response to the distance difference between each two of the ranging results being less than the preset distance threshold.

17. The method according to claim 13, wherein performing conflict detection on the plurality of designated allocation objects to determine if the transmission conflict occurs between the plurality of designated allocation objects comprises:
receiving a plurality of optical powers each sent by a respective one of the designated allocation objects; and
determining whether transmission conflict occurs between the plurality of designated allocation objects according to the optical powers.

18. The method according to claim 17, wherein determining whether transmission conflict occurs between the plurality of designated allocation objects according to the optical powers comprises:
determining that transmission conflict occurs between a subset of the designated allocation objects corresponding to an optical power array, in response to a presence of the optical power array indicating a power difference greater than or equal to a preset power threshold in the optical powers.
or,
determining no transmission conflict occurs between the subset of the designated allocation objects, in response to the power difference between each two of the optical powers being less than the preset power threshold.

19. The method according to claim 13, wherein performing conflict detection on the plurality of designated allocation objects to determine if the transmission conflict occurs between the plurality of designated allocation objects comprises:
receiving a plurality of test signals each sent by a respective one of the designated allocation objects over overlapping bandwidths; and
determining whether transmission conflict occurs between the plurality of designated allocation objects according to the test signals.

20. The method according to claim 19, wherein determining whether transmission conflict occurs between the plurality of designated allocation objects according to the test signals comprises:
determining that transmission conflict occurs between the designated allocation objects, in response to a determination of a bit error increment being greater than or equal to a third threshold according to the test signals;
or,
determining that no transmission conflict occurs between the designated allocation objects, in response to a determination of the bit error increment being less than the third threshold according to the test signal.

21. The method according to any one of claims 14 to 19, wherein when transmission conflict occurs between the designated allocation objects, the method further comprises:
allocating different bandwidths to different ones of the designated allocation objects, to avoid an overlapping of the bandwidths obtained by different ones of the designated allocation objects.

22. The method according to claim 1, wherein time synchronization is supported between the transmission channels.

23. The method according to claim 1, wherein performing bandwidth allocation to the plurality of designated allocation objects across different transmission channels comprises:
performing a centralized bandwidth allocation for the designated allocation objects across different transmission channels;
or,
perform independent bandwidth allocations for the designated allocation objects across different transmission channels.

24. A method for bandwidth allocation, comprising:
acquiring a bandwidth allocation result indicating bandwidths acquired by each of a plurality of designated allocation objects across different transmission channels;
determining a plurality of target objects from the plurality of designated allocation objects according to the bandwidth allocation result; and
performing fault diagnosis on the plurality of target objects.

25. The method according to claim 24, wherein determining the plurality of target objects from the plurality of designated allocation objects according to the bandwidth allocation result comprises:
determining the plurality of target objects that have overlapping bandwidths among the plurality of designated allocation objects according to the bandwidth allocation result.

26. The method according to claim 24, wherein performing the fault diagnosis on the plurality of target objects comprises:
identifying a presence of a transmission conflict between the plurality of target objects, in response to a presence of a designated allocation object that causes a bit error among the plurality of target objects; and
performing at least one of, equipment replacement, or transmission route alternation, according to the transmission conflict.

27. The method according to claim 24, wherein performing the fault diagnosis on the plurality of target objects comprises:
identifying an absence of a transmission conflict between the plurality of target objects, in response to an absence of a designated allocation object that causes a bit error among the plurality of target objects.

28. The method according to claim 24, wherein performing the fault diagnosis on the plurality of target objects comprises:
determining an absence of the transmission conflict between the plurality of target objects in response to both a presence of a designated distribution object that causes a bit error, and a support of an optical line terminal (OLT) for a correction processing of the bit error.

29. The method according to claim 24, wherein the bandwidth allocation result is acquired through the bandwidth allocation performed by an OLT to each of the plurality of designated allocation objects across different transmission channels according to at least one of, a received ranging result, a received optical power, or a determined signal collision.

30. The method according to claim 24, wherein the bandwidth allocation result is acquired through the bandwidth allocation performed by a network management system to each of the designated allocation objects across different transmission channels.

31. The method according to claim 24, wherein time synchronization is supported between the different transmission channels.

32. The method according to claim 24, wherein,
the bandwidth allocation result is obtained by performing centralized bandwidth allocation to each of the plurality of designated allocation objects across different transmission channels;
or,
the bandwidth allocation result is obtained by performing independent bandwidth allocations to each of the plurality of designated allocation objects across different transmission channels.

33. An apparatus for bandwidth allocation, comprising:
at least one processor; and
at least one memory configured to store a program which,
when executed by the at least one processor, causes the at least one processor to carry out the method as claimed in any one of claims 1 to 32.

34. A computer readable storage medium storing a computer program which, when executed by a processor, causes the processor to carry out the method as claimed in any one of claims 1 to 32.

35. A computer program product, comprising a computer program or a computer instruction stored in a computer-readable storage medium which, when executed by a processor of a computer device, causes the computer device to carry out the method as claimed in any one of claims 1 to 32.
